# EUROPEAN PATENT SPECIFICATION

(11) **EP 4 343 912 B1**
(45) Date of publication and mention of the grant of the patent: **02.09.2026**
(21) Application number: 23182052.3
(22) Date of filing: 28.06.2023
(51) Int. Cl.: H01M 10/052, H01M 10/0567, H01M 10/0568, H01M 10/0525, H01M 50/46

(54) **ELECTROLYTE FOR RECHARGEABLE LITHIUM BATTERY AND RECHARGEABLE LITHIUM BATTERY INCLUDING THE SAME**
ELEKTROLYT FÜR EINE WIEDERAUFLADBARE LITHIUMBATTERIE UND WIEDERAUFLADBARE LITHIUMBATTERIE DAMIT
ÉLECTROLYTE POUR BATTERIE AU LITHIUM RECHARGEABLE ET BATTERIE AU LITHIUM RECHARGEABLE LE COMPRENANT

(30) Priority: 21.09.2022 KR 20220119526
(43) Date of publication of application: 27.03.2024
(73) Proprietor: Samsung SDI Co., Ltd., Yongin-si, Gyeonggi-do 17084 (KR)
(72) Inventor: BAE, Tae Hyon, 17084 Yongin-si (KR); LEE, Harim, 17084 Yongin-si (KR); KIM, Sanghyung, 17084 Yongin-si (KR); SON, Seunghyeon, 17084 Yongin-si (KR); YU, Arum, 17084 Yongin-si (KR); KIM, Yunhee, 17084 Yongin-si (KR)
(74) Representative: Marks & Clerk LLP

(56) References cited:
- EP-B1- 0 531 492
- CN-B- 102 569 892
- CN-B- 110 176 630
- JIANG LIHUA ET AL: "A self-cooling and flame-retardant electrolyte for safer lithium ion batteries", vol. 2, no. 6, 12 April 2018 (2018-04-12), UK, pages 1323 - 1331, XP093118468, ISSN: 2398-4902, Retrieved from the Internet <URL:https://dx.doi.org/10.1039/C8SE00111A> DOI: 10.1039/C8SE00111A
- LIU YUJUN ET AL: "Experimental study on the efficiency of dodecafluoro-2-methylpentan-3-one on suppressing lithium-ion battery fires", RSC ADVANCES, vol. 8, no. 73, 18 December 2018 (2018-12-18), GB, pages 42223 - 42232, XP093118471, ISSN: 2046-2069, DOI: 10.1039/C8RA08908F

## Description

### BACKGROUND OF THE INVENTION

### (a) Field of the Invention

An electrolyte for a rechargeable lithium battery and a rechargeable lithium battery including the same are disclosed.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions. The electrolyte includes an organic solvent in which a lithium salt is dissolved and critically determines stability and performance of a rechargeable lithium battery. Prior art document 1 discloses an electrolyte comprising a non-aqueous organic solvent, a lithium salt, and an additive comprising a fluorinated ketone.

Prior art document 1: JIANG LIHUA ET AL: "A self-cooling and flame-retardant electrolyte for safer lithium ion batteries",SUSTAINABLE ENERGY & FUELS, vol. 2, no. 6, 12 April 2018 (2018-04-12), pages 1323-1331, XP093118468,UK ISSN: 2398-4902, DOI: 10.1039/C8SE00111 ARetrieved from the Internet:URL:https://dx.doi.org/10.1039/ C8SE00111A

Recently, as a high-capacity and high-energy density battery is required, since it is necessary to design a battery drivable at a high voltage of about 4.5 V or higher, while an electrode is highly densified, improvement of high-rate charging performance of the battery is required. However, under harsh conditions such as high voltage and high-rate charging, the positive electrode is deteriorated, and lithium dendrite grows on the surface of the negative electrode, which may accelerate a side reaction between the electrodes and the electrolyte and thus deteriorate battery cycle-life and cause a battery safety problem due to gas generation and the like.

In order to solve the problem, methods of suppressing the side reaction with the electrolyte by surface-treating the electrodes for protection have been proposed. However, the surface treatment of the positive electrode has no insufficient protection effect during the high voltage driving conditions, and the surface treatment of the negative electrode has been reported to have a problem of deteriorating capacity. Accordingly, in the design of high-capacity electrodes capable of driving at a high voltage and high-rate charging, development of an electrolyte improving safety and performance of batteries is required.

On the other hand, conventional techniques for improving impregnability of an electrolyte by applying an ester-based solvent with low viscosity to the electrolyte to suppress the lithium dendrite of the negative electrode have been proposed. However, the ester-based solvent has low oxidation resistance and strong inflammability and thus disadvantages of poor battery performance and safety at a high voltage.

### SUMMARY OF THE INVENTION

An embodiment provides an electrolyte capable of suppressing the generation of lithium dendrites in the negative electrode by improving the impregnation of the negative electrode and uniformizing the intercalation of lithium ions on the surface of the negative electrode.

Another embodiment provides a rechargeable lithium battery with improved high-rate charging performance, high-temperature cycle-life characteristics, and safety by including the electrolyte.

An embodiment provides an electrolyte for a rechargeable lithium battery including a non-aqueous organic solvent, a lithium salt, and an additive, wherein the additive includes a fluorinated ketone and an Ag salt.

The fluorinated ketone may be represented by Chemical Formula 1.

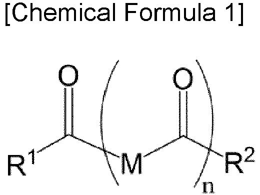

In Chemical Formula 1, M is a substituted or unsubstituted C1 to C30 alkylene group, a substituted or unsubstituted C2 to C30 alkenylene group, or a substituted or unsubstituted C2 to C30 alkynylene group, n is an integer of 0 to 5, and
R¹ and R² are each independently a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C20 cycloalkyl group, or a substituted or unsubstituted C3 to C20 aryl group, provided that at least one of R¹ and R² includes at least one fluorine (F).

The M of Chemical Formula 1 may be a substituted or unsubstituted C1 to C30 alkylene group, R¹ and R² may each independently be a substituted or unsubstituted C1 to C30 alkyl group, a substituted or unsubstituted C2 to C30 alkenyl group, or a substituted or unsubstituted C2 to C30 alkynyl group, provided that at least one of R¹ and R² includes at least one fluorine and n may be 0 or 1.

The M of Chemical Formula 1 may be a substituted or unsubstituted C1 to C10 alkylene group, R¹ and R² may each independently be a substituted or unsubstituted C1 to C10 alkyl group, a substituted or unsubstituted C2 to C10 alkenyl group, or a substituted or unsubstituted C2 to C10 alkynyl group, provided that at least one of R¹ and R² includes at least one fluorine and n may be 0 or 1.

At least one of R¹ and R² in Chemical Formula 1 may be a C1 to C10 fluoroalkylene group in which at least one hydrogen is substituted with fluorine.

At least one of R¹ and R² in Chemical Formula 1 may be a C1 to C10 fluoroalkylene group substituted with 3 to 21 fluorines.

At least one of R¹ and R² in Chemical Formula 1 may be a C1 to C10 perfluoroalkylene group in which all hydrogens are substituted with fluorine.

The fluorinated ketone may be represented by Chemical Formula 1-1:

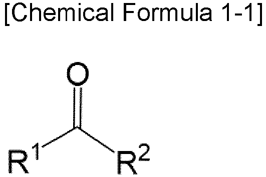

In Chemical Formula 1-1,
R¹ and R² are each independently a substituted or unsubstituted C1 to C30 alkyl group, provided that at least one of R¹ and R² includes at least one fluorine.

At least one of R¹ and R² may be a C1 to C10 perfluoroalkyl group in which all hydrogens are substituted with fluorine.

R¹ and R² may be functional groups different from each other, and Chemical Formula 1-1 may have an asymmetric structure.

The fluorinated ketone may be represented by any one of Chemical Formula 1-2 and Chemical Formula 1-3.

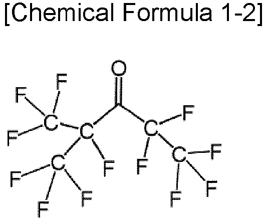

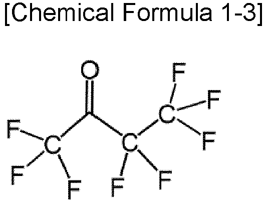

The fluorinated ketone may be included in an amount of about 1.0 wt% to about 10.0 wt% based on the total weight of the electrolyte for a rechargeable lithium battery.

The Ag salt may include one or more selected from AgNO₃, AgPF₆, AgFSI, AgTFSI, AgF, AgSO₃CF₃, AgBF₄, AgNO₂, AgN₃, and AgCN.

The Ag salt may be included in an amount of about 0.1 wt% to about 10.0 wt% based on the total weight of the electrolyte for a rechargeable lithium battery.

The fluorinated ketone and the Ag salt may be included in a weight ratio of about 4:6 to about 9:1.

The electrolyte may further include a compound represented by Chemical Formula 2.

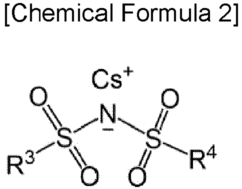

In Chemical Formula 2,
R³ and R⁴ are each independently a fluoro group or a substituted C1 to C10 fluoroalkyl group including at least one fluorine.

Chemical Formula 2 may be represented by Chemical Formula 2-1 or Chemical Formula 2-2.

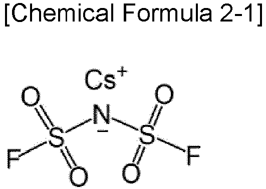

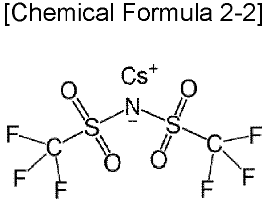

The compound represented by Chemical Formula 2 may be included in an amount of about 0.1 wt% to about 5.0 wt% based on the total weight of the electrolyte for a rechargeable lithium battery.

A weight ratio of the fluorinated ketone and the compound represented by Chemical Formula 2 may be about 4:6 to about 9:1.

The additive may be included in an amount of about 1.0 wt% to about 30.0 wt% based on the total weight of the electrolyte for a rechargeable lithium battery.

The electrolyte for a rechargeable lithium battery may further include other additives, and the other additives may include at least one selected from vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluorobiphenyl (2-FBP), lithium difluorooxalate borate (LiDFOB), and lithium bisoxalate borate (LiBOB).

According to another embodiment, a rechargeable lithium battery includes a positive electrode including a positive electrode active material, a negative electrode including a negative electrode active material, a separator between the positive electrode and the negative electrode, and the aforementioned electrolyte for a rechargeable lithium battery.

The negative electrode may have a density of greater than or equal to about 1.6 g/cc.

At least some of the above and other features of the invention are set out in the claims.

The electrolyte for a rechargeable lithium battery according to an embodiment may improve impregnability of the negative electrode and uniformly insert lithium ions into the surface of the negative electrode, thereby suppressing occurrence of lithium dendrites in the negative electrode.

A rechargeable lithium battery according to an embodiment may have improved high-rate charging performance, high-temperature cycle-life characteristics, and stability by including the electrolyte for a rechargeable lithium battery.

### BRIEF DESCRIPTION OF THE DRAWINGS

FIG. 1 is a schematic view illustrating a rechargeable lithium battery according to an embodiment.
FIG. 2 is a graph showing a discharge capacity retention rate of rechargeable lithium battery cells according to evaluation of high-temperature cycle-life characteristics.

### DETAILED DESCRIPTION OF THE EMBODIMENTS

Hereinafter, embodiments will be described in detail so that those skilled in the art can easily implement them. However, this disclosure may be embodied in many different forms and is not construed as limited to the example embodiments set forth herein.

In the present specification, it will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In the present specification, "at least one of A, B, or C", "one of A, B, C, or a combination thereof" and "one of A, B, C, and a combination thereof" refer to each component and a combination thereof (e.g. A; B; C; A and B; A and C; B and C; or A, B, and C).

Herein, "or" is not to be construed as an exclusive meaning, for example, "A or B" is construed to include A, B, A+B, and the like.

Hereinafter, the term "combination" includes a mixture of two or more, a composite of two or more, a copolymer of two or more, an alloy of two or more, a blend of two or more, mutual substitution, and a laminated structure of two or more.

As used herein, when a definition is not otherwise provided "substituted" refers to replacement of hydrogen of a substituent or a compound by a substituent selected from deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof. In addition, in a specific example, "substituted" refers to replacement of hydrogen of a substituent or a compound by a substituent selected from deuterium, a cyano group, a halogen, a methyl group, an ethyl group, a propyl group, a butyl group, a phenyl group, a biphenyl group, a terphenyl group, a trifluoromethyl group, or a naphthyl group, for example, a fluoro group, a chloro group, a bromo group, an iodo group, a methyl group, an ethyl group, a propyl group, or a butyl group, and, for example, a fluoro group, a chloro group, a bromo group, or an iodo group.

Herein, expressions such as C1 to C30 mean that the number of carbons is 1 to 30.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

Hereinafter, a more detailed configuration of a rechargeable lithium battery according to an embodiment of the present disclosure will be described.

### Electrolyte

An electrolyte for a rechargeable lithium battery according to an embodiment includes a non-aqueous organic solvent, a lithium salt, and an additive. The additive includes a fluorinated ketone and an Ag salt.

The electrolyte for a rechargeable lithium battery according to an embodiment includes a fluorinated ketone and an Ag salt and thus may have flame retardant characteristics, effectively suppress generation of lithium dendrite at the negative electrode, and improve safety and battery characteristics, when applied to a rechargeable lithium battery, and in particular, improve overall performance of a battery to which a negative electrode with high density of about 1.6 g/cc or more and a high voltage of about 4.5 V or more are applied and also, high-rate charging performance of about 3.0 C or so.

Specifically, since the fluorinated ketone has low viscosity, negative electrode impregnability of the electrolyte including the same may be improved. In addition, the fluorinated ketone includes at least one fluorine in the compound and thus may secure flame retardant characteristics. Accordingly, a rechargeable lithium battery including the same may improve safety.

In addition, since the Ag salt improves conductivity of lithium ions in the rechargeable lithium battery, the lithium ions may effectively migrate even at a negative electrode with high density and thus suppress generation of lithium dendrite. Accordingly, high-temperature cycle-life characteristics and stability of a rechargeable lithium battery using the electrolyte including the same may be improved.

### Fluorinated Ketone

The fluorinated ketone is a compound having a ketone group, and may be referred to as a ketone compound including fluorine by replacing at least one hydrogen by fluorine. The fluorinated ketone may be, for example, represented by Chemical Formula 1.

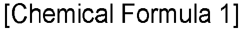

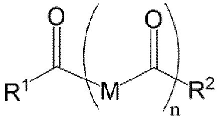

In Chemical Formula 1,
M is a substituted or unsubstituted C1 to C30 (*e.g*. C1 to C10) alkylene group, a substituted or unsubstituted C2 to C30 (*e.g*. C2 to C10) alkenylene group, or a substituted or unsubstituted C2 to C30 (*e.g*. C2 to C10) alkynylene group,
R¹ and R² are each independently a substituted or unsubstituted C1 to C30 (*e.g.* C1 to C10) alkyl group, a substituted or unsubstituted C2 to C30 (*e.g.* C2 to C10) alkenyl group, a substituted or unsubstituted C2 to C30 (*e.g.* C2 to C10) alkynyl group, a substituted or unsubstituted C3 to C20 (*e.g.* C3 to C10) cycloalkyl group, or a substituted or unsubstituted C6 to C20 (*e.g.* C6 to C10) aryl group, provided that at least one of R¹ and R² includes at least one fluorine, and n is an integer of 0 to 5.

In Chemical Formula 1, M may be, for example, a substituted or unsubstituted C1 to C30 alkylene group, for example, a substituted or unsubstituted C1 to C20 alkylene group, a substituted or unsubstituted C1 to C10 alkylene group, a substituted or unsubstituted C1 to C6 alkylene group, a substituted or unsubstituted C1 to C5 alkylene group, or a substituted or unsubstituted C1 to C4 alkylene group. For example, in Chemical Formula 1, M may be a C1 to C10 fluoroalkylene group in which at least one hydrogen is substituted with fluorine.

In Chemical Formula 1, n is any one of an integer from 0 to 5, for example, any one of an integer from 0 to 4, any one of an integer from 0 to 3, and any one of an integer from 0 to 2, and, for example, 0 or 1.

In Chemical Formula 1, R¹ and R² may each independently be, for example, a substituted or unsubstituted C1 to C30 (*e.g.* C1 to C10) alkyl group, a substituted or unsubstituted C2 to C30 (*e.g.* C2 to C10) alkenyl group, or a substituted or unsubstituted C2 to C30 (*e.g.* C2 to C10) alkynyl group. For example, R¹ and R² may each independently be a substituted or unsubstituted C1 to C30 alkyl group, for example, a substituted or unsubstituted C1 to C20 alkyl group, a substituted or unsubstituted C1 to C10 alkyl group, a substituted or unsubstituted C1 to C6 alkyl group, a substituted or unsubstituted C1 to C5 alkyl group, a substituted or unsubstituted C1 to C4 alkyl group, or a substituted or unsubstituted C1 to C3 alkyl group. Herein, the alkyl group may be chain or branched type. In Chemical Formula 1, at least one of R¹ and R² may be a C1 to C10 fluoroalkylene group in which at least one hydrogen is substituted with fluorine. At least one of R¹ and R² may mean either one of R¹ and R² or both of R¹ and R². In one example, both R¹ and R² may each independently be a C1 to C10 fluoroalkylene group in which at least one hydrogen is substituted with fluorine.

In the C1 to C10 fluoroalkylene group in which one or more hydrogens are substituted with fluorine, the number of fluorine substitutions may be, for example, 1 to 21, 2 to 21, 3 to 21, 4 to 21, or 5 to 21, and the like. For example, the C1 to C10 fluoroalkylene group in which at least one hydrogen is substituted with fluorine may be a C1 to C10 fluoroalkylene group in which hydrogens are substituted (*i.e.* replaced) with 3 to 21 fluorines.

In Chemical Formula 1, at least one of R¹ and R² may be a C1 to C10 perfluoroalkylene group in which all hydrogens are substituted with fluorine, and may be, for example, a C1 to C6 perfluoroalkylene group or a C2 to C5 perfluoroalkylene group. In one example, both R¹ and R² may each independently be a C1 to C10 perfluoroalkylene group. In an embodiment, when a fluorinated ketone including a perfluoroalkylene group is used, it is possible to improve electrolyte impregnability, improve battery flame retardancy, and improve overall battery performance.

In Chemical Formula 1, R¹ and R² may be the same as or different from each other. In one example, R¹ and R² may each be a C1 to C10 perfluoroalkylene group, but may be different from each other. In this case, high-rate charging performance at high voltage may be improved while ensuring battery flame retardancy.

In Chemical Formula 1, M may be a substituted or unsubstituted C1 to C10 alkylene group, R¹ and R² may each independently be a substituted or unsubstituted C1 to C10 alkyl group, a substituted or unsubstituted C2 to C10 alkenyl group, or a substituted or unsubstituted C2 to C10 alkynyl group, provided that at least one of R¹ and R² includes at least one fluorine, and n may be 0 or 1.

As a specific example, the fluorinated ketone may be represented by Chemical Formula 1-1. Chemical Formula 1-1 may be referred to as a case where n is 0 in Chemical Formula 1.

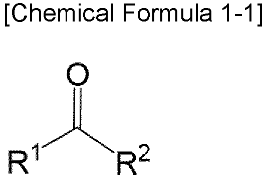

In Chemical Formula 1-1, R¹ and R² are each independently a substituted or unsubstituted C1 to C30 alkyl group, and at least one of R¹ and R² includes one or more fluorines.

For example, R¹ and R² may each independently be a C1 to C20 fluoroalkyl group substituted with at least one fluorine. For example, the fluoroalkyl group refers to one in which all or a portion of the hydrogens of an ethylene group, propyl group, butyl group, pentyl group, hexyl group, heptyl group, octyl group, nonyl group, or decyl group are substituted with fluorine. For example, all hydrogens of the ethylene group may be substituted with fluorine. The alkyl group includes all structural isomers. For example, the propyl group includes an n-propyl group and an iso-propyl group, and the butyl group includes an n-butyl group, an iso-butyl group, a sec-butyl group, and a tert-butyl group.

In addition, the fluoroalkyl group includes those in which all or a portion of the hydrogens among the aforementioned alkyl groups are substituted (i.e. replaced) with fluoroalkyl groups. For example, one of the hydrogens of ethylene may be substituted with a trifluoromethyl group and all of the remaining hydrogens may be substituted with fluorine. For example, two of the hydrogens of ethylene may be substituted with trifluoromethyl groups, and all of the remaining hydrogens may be substituted with fluorine, but is not limited thereto.

In Chemical Formula 1-1, R¹ and R² may be the same as or different from each other. In one example, R¹ and R² of Chemical Formula 1-1 may be different from each other, and thus the compound represented by Chemical Formula 1-1 may have an asymmetric structure. In this case, it is possible to further improve high-rate charging performance at high voltage while securing flame retardancy of the battery.

The fluorinated ketone represented by Chemical Formula 1-1 may be, for example, represented by any one of Chemical Formulas 1-2 and 1-3.

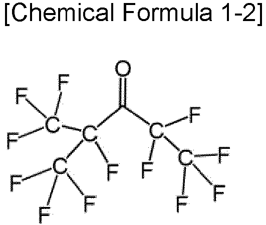

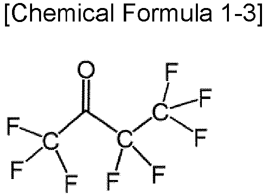

The fluorinated ketone may be included in an amount of about 1.0 wt% to about 10.0 wt% based on the total weight of the electrolyte for a rechargeable lithium battery. For example, it may be included in an amount of greater than or equal to about 1.5 wt%, for example, greater than or equal to about 2.0 wt%, for example, greater than or equal to about 2.5 wt%, for example, greater than or equal to about 3.0 wt%, for example, greater than or equal to about 3.5 wt%, or, for example, greater than or equal to about 4.0 wt% and, for example, less than or equal to about 10.0 wt%, for example, less than or equal to about 9.0 wt%, for example, less than or equal to about 8.5 wt%, for example, less than or equal to about 8.0 wt%, for example, less than or equal to about 7.5 wt%, or, for example, less than or equal to about 7.0 wt%, but is not limited thereto. When the fluorinated ketone is included within the above range in the electrolyte according to an embodiment, flame retardant characteristics may be imparted to the electrolyte and impregnability of the negative electrode of the electrolyte may be improved.

### Ag Salt

The Ag salt included in the electrolyte for a rechargeable lithium battery according to an embodiment refers to a compound including an Ag cation and an anion paired with the Ag cation, and may include a nitrate ion, a carbonate ion, a sulfate ion, a chloride ion, or a sulfide ion as the type of anion.

The Ag salt may include, for example, one or more selected from AgNO₃, AgPF₆, AgFSI, AgTFSI, AgF, AgSO₃CF₃, AgBF₄, AgNO₂, AgN₃, and AgCN. Specifically, the Ag salt may be silver nitrate, silver carbonate, or silver sulfate, for example, silver nitrate. In the case of the silver nitrate, it can be effectively dissolved in an electrolyte, and is advantageous in suppressing lithium dendrites generated in a high-density negative electrode by improving lithium ion conductivity in the negative electrode. However, it is not limited to silver nitrate, and any compound that is soluble in an electrolyte and includes Ag cations may be used as the Ag salt.

The Ag salt may be included in an amount of about 0.1 wt% to about 10.0 wt% based on the total weight of the electrolyte for a rechargeable lithium battery. For example, it may be included in an amount of greater than or equal to about 0.10 wt%, for example, greater than or equal to about 0.20 wt%, for example, greater than or equal to about 0.30 wt%, for example, greater than or equal to about 0.40 wt%, for example, greater than or equal to about 0.50 wt%, for example, greater than or equal to about 1.0 wt%, for example, greater than or equal to about 2.0 wt%, or, for example, greater than or equal to about 3.0 wt%, and, for example, less than or equal to about 10.0 wt%, for example, less than or equal to about 9.0 wt%, for example, less than or equal to about 8.5 wt%, for example, less than or equal to about 8.0 wt%, for example, less than or equal to about 7.5 wt%, or, for example, less than or equal to about 7.0 wt%, but is not limited thereto. By including the Ag salt within the above range in the electrolyte according to an embodiment, generation of dendrite in a negative electrode in a battery including the Ag salt may be suppressed.

A content ratio of the fluorinated ketone and the Ag salt may be about 4:6 to about 9:1, for example, 1:1, for example, about 2:1, for example, about 3:1, but not limited to these.

### Compound represented by Chemical Formula 2

The electrolyte for a rechargeable lithium battery according to another embodiment may further include a compound represented by Chemical Formula 2.

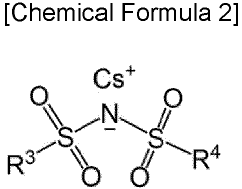

In Chemical Formula 2, R³ and R⁴ are each independently a fluoro group, or a substituted C1 to C10 fluoroalkyl group including at least one fluorine.

For example, R³ and R⁴ of Chemical Formula 2 may each independently be a fluoro group, or a C1 to C4 fluoroalkyl group substituted with at least three fluoro groups. As a specific example, R³ and R⁴ of Chemical Formula 2 may each independently be a fluoro group, or a C1 to C3 fluoroalkyl group substituted with at least three fluoro groups.

As a more specific example, R³ and R⁴ of Chemical Formula 2 may each independently be a fluoro group, or a C1 to C2 fluoroalkyl group substituted with at least three fluoro groups.

Since the electrolyte for a rechargeable lithium battery according to an embodiment may include the compound represented by Chemical Formula 2, the compound is decomposed in the electrolyte and forms a film on the surfaces of the positive and negative electrodes to effectively control elution of lithium ions generated from the positive electrode and thus prevent decomposition of the positive electrode. Specifically, the compound represented by Chemical Formula 2 may be reduced and decomposed earlier than a carbonate-based solvent included in a non-aqueous organic solvent and thus form an SEI (Solid Electrolyte Interface) film on the negative electrode to prevent decomposition of the electrolyte and also the resulting decomposition reaction of the electrode, suppressing an increase of internal resistance due to generation of gas. The SEI film formed on the negative electrode is partially decomposed through a reduction reaction during charging and discharging and migrates to the surface of the positive electrode and thus forms a film on the positive electrode surface through an oxidation reaction to prevent decomposition of the positive electrode surface and an oxidation reaction of the electrolyte, resultantly contributing to improvement of high temperature and low temperature cycle-life characteristics.

In other words, the electrolyte may include the compound represented by Chemical Formula 2 and thus may improve cycle-life characteristics and safety of a battery.

Chemical Formula 2 may be, for example, represented by Chemical Formula 2-1 or Chemical Formula 2-2.

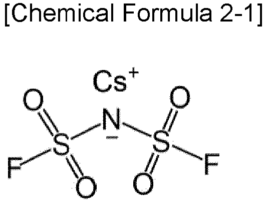

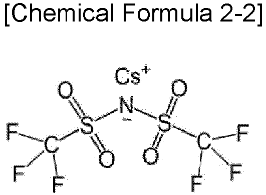

The compound represented by Chemical Formula 2 may be included in an amount of about 0.1 wt% to about 5.0 wt% based on the total weight of the electrolyte for a rechargeable lithium battery. For example, it may be included in an amount of greater than or equal to about 0.10 wt%, for example, greater than or equal to about 0.20 wt%, for example, greater than or equal to about 0.25 wt%, for example, greater than or equal to about 0.30 wt%, or, for example, greater than or equal to about 0.35 wt%, and, for example, less than or equal to about 5.0 wt%, for example, less than or equal to about 4.0 wt%, for example, less than or equal to about 3.0 wt%, for example, less than or equal to about 2.0 wt%, or, for example, less than or equal to about 1.0 wt%, but is not limited thereto.

By including the compound represented by Chemical Formula 2 within the above range in the electrolyte according to an embodiment, an increase in internal resistance of the battery due to decomposition of the electrolyte may be suppressed, and cycle-life characteristic and safety of the battery may be improved.

A weight ratio of the fluorinated ketone and the compound represented by Chemical Formula 2 may be about 4:6 to about 9:1, for example, about 1:1, for example, about 2:1, for example, about 3 : 1, but is not limited thereto.

The electrolyte for a rechargeable lithium battery according to an embodiment may further include other additives. The other additives may include at least one selected from vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluorobiphenyl (2-FBP), lithium difluorooxalate borate (LiDFOB), and lithium bisoxalate borate (LiBOB).

The additive may be included in an amount of about 1.0 wt% to about 30.0 wt% based on the total weight of the electrolyte for a rechargeable lithium battery. For example, it may be included in an amount of greater than or equal to about 1.0 wt%, for example, greater than or equal to about 2.0 wt%, for example, greater than or equal to about 3.0 wt%, for example, greater than or equal to about 4.0 wt%, or, for example, greater than or equal to about 5.0 wt%, and, for example, less than or equal to about 30.0 wt%, for example, less than or equal to about 25.0 wt%, for example, less than or equal to about 20.0 wt%, for example, less than or equal to about 18.0 wt%, for example, less than or equal to about 16.0 wt%, or, for example, less than or equal to about 15.0 wt%, but is not limited thereto. By including the additive within the above range in the electrolyte according to an embodiment, high-rate charging performance, high-temperature cycle-life characteristics, and stability of a rechargeable lithium battery including the additive may be improved.

The other additives may be included in an amount of, for example, about 0.1 wt% to about 30.0 wt%, about 1.0 wt% to about 20.0 wt%, or about 2.0 wt% to about 15.0 wt% based on the total weight of the electrolyte for a rechargeable lithium battery. For example, the other additives may be included in an amount of greater than or equal to about 1.0 wt%, for example, greater than or equal to about 2.0 wt%, for example, greater than or equal to about 3.0 wt%, for example, greater than or equal to about 4.0 wt%, or, for example, greater than or equal to about 5.0 wt%, and, for example, less than or equal to about 30.0 wt%, for example, less than or equal to about 25.0 wt%, for example, less than or equal to about 20.0 wt%, for example, less than or equal to about 18.0 wt%, for example, less than or equal to about 16.0 wt%, or, for example, less than or equal to about 15.0 wt%, but is not limited thereto. By including other additives within the above range in the electrolyte according to an embodiment, high-rate charging performance, high-temperature cycle-life characteristics, and stability of a rechargeable lithium battery including the additives may be improved.

### Non-aqueous Organic Solvent

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may be cyclohexanone, and the like. In addition, the alcohol-based solvent may be ethanol, isopropyl alcohol, and the like and the aprotic solvent may be nitriles such as R-CN (where R is a C2 to C20 linear, branched, or cyclic hydrocarbon group, and may include a double bond, an aromatic ring, or an ether bond), and the like, amides such as dimethyl formamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula 3 may be used.

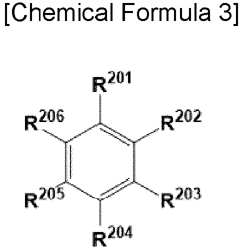

**In** Chemical Formula 3, R²⁰¹ to R²⁰⁶ are the same or different and are hydrogen, a halogen, a C1 to C10 alkyl group, a haloalkyl group, or a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula 4 in order to improve cycle-life of a battery.

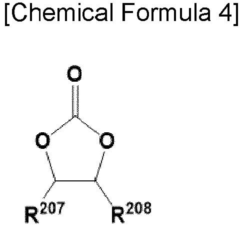

In Chemical Formula 4, R²⁰⁷ and R²⁰⁸ are the same or different, and are selected from hydrogen, a halogen, a cyano group (CN), a nitro group (NO₂), and a fluorinated C1 to C5 alkyl group.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving cycle-life may be used within an appropriate range.

### Lithium Salt

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide, LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

### Rechargeable Lithium Battery

The additive and the electrolyte may be applied to a rechargeable lithium battery.

A rechargeable lithium battery according to an embodiment includes a positive electrode including a positive electrode active material; a negative electrode including a negative electrode active material; a separator between the positive electrode and the negative electrode; and the aforementioned electrolyte.

The rechargeable lithium battery may be classified into a lithium ion battery, a lithium ion polymer battery, and a lithium polymer battery according to the presence of a separator and the type of electrolyte used therein, may be classified into a cylindrical, prismatic, coin, pouch-type according to the shape, and may be classified into a bulk type and a thin film type according to the size. Structures and manufacturing methods for the batteries are well known in the art and thus detailed descriptions are omitted.

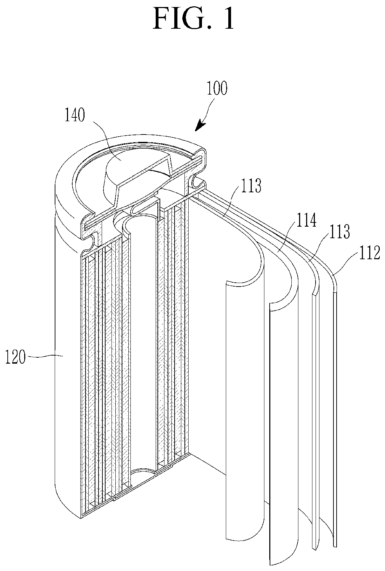

Here, as an example of the rechargeable lithium battery, a cylindrical rechargeable lithium battery will be described. FIG. 1 schematically illustrates the structure of a rechargeable lithium battery according to an embodiment. Referring to FIG. 1, a rechargeable lithium battery according to an embodiment includes a battery cell including a positive electrode 114, a negative electrode 112 facing the positive electrode 114, a separator 113 between the positive electrode 114 and an electrolyte (not shown) impregnating the positive electrode 114, negative electrode 112, and separator 113, a battery case 120 containing the battery cell, and a sealing member 140 sealing the battery case 120.

### Positive Electrode

The positive electrode includes a positive electrode current collector and a positive electrode active material layer on the positive electrode current collector, and the positive electrode active material layer includes a positive electrode active material.

As the positive electrode active material, a compound (lithiated intercalation compound) being capable of intercalating and deintercalating lithium may be used, and, for example, a compound represented by any one of the following chemical formulas may be included.

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤1.8, 0 ≤ b ≤ 0.5, 0 ≤ c ≤ 0.5, 0 < a ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < a <2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < a ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < a < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < a < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2);

and

LiₐFePO₄ (0.90 ≤ a ≤ 1.8).

In the above chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminium oxide (NCA), lithium nickel cobalt manganese oxide (NCM), lithium nickel manganese oxide (NM), lithium manganese oxide (LMO), or lithium iron phosphate (LFP).

As the positive electrode active material, one having a coating layer on the surface of the composite oxide may be used, or a mixture of the composite oxide and the composite oxide having a coating layer may be used. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound. For example, the method may include any coating method such as spray coating, dipping, and the like, but is not illustrated in more detail since it is well-known in the related field.

The positive electrode active material may be, for example, at least one of lithium composite oxides represented by Chemical Formula 5.

[Chemical Formula 5] LiₓM¹_{y}M²_{z}M³_{1-y-z}O₂

In Chemical Formula 5,
0.5≤x≤1.8, 0<y≤1, 0≤z≤1, 0≤y+z≤1, and M¹, M², and M³ are each independently a metal selected from Ni, Co, Mn, Al, Sr, Mg, or La, and a combination thereof.

In an embodiment, the positive electrode active material may be at least one selected from LiCoO₂, LiNiO₂, LiMnO₂, LiMn₂O₄, LiNiₐMn_{b}Co_{c}O₂ (a+b+c=1), LiNiₐMn_{b}Co_{c}Al_{d}O₂ (a+b+c+d=1), or LiNiₑCo_{f}Al_{g}O₂ (e+f+g=1).

For example, the positive electrode active material selected from LiNiₐMn_{b}Co_{c}O₂ (a+b+c=1), LiNiₐMn_{b}Co_{c}Al_{d}O₂ (a+b+c+d=1), and LiNiₑCo_{f}Al_{g}O₂ (e+f+g=1) may be a high-Ni positive electrode active material.

For example, in the case of LiNiₐMn_{b}Co_{c}O₂ (a+b+c=1) and LiNiₐMn_{b}Co_{c}Al_{d}O₂ (a+b+c+d=1), the nickel content may be greater than or equal to about 60% (a ≥ 0.6), and more specifically, greater than or equal to about 80% (a ≥ 0.8).

For example, in the case of LiNiₑCo_{f}Al_{g}O₂ (e+f+g=1), the nickel content may be greater than or equal to about 60% (e ≥ 0.6), and more specifically, greater than or equal to about 80% (e ≥ 0.8).

An amount of the positive electrode active material may be about 90 wt% to about 98 wt% based on the total weight of the positive electrode active material layer.

The positive electrode active material layer may optionally include a conductive material and a binder. In this case, each content of the conductive material and the binder may be about 1.0 wt% to about 5.0 wt% based on the total weight of the positive electrode active material layer.

The conductive material is used to impart conductivity to the positive electrode, and in the configured battery, any material that does not cause chemical change and is electronically conductive may be used. For example, the conductive material may be a carbon-based material such as natural graphite, artificial graphite, carbon black, acetylene black, ketjen black, a carbon fiber, a carbon nanofiber, or a carbon nanotube; a metal-based material such as a metal powder or a metal fiber including copper, nickel, aluminium, and silver; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include an aluminium foil or SUS foil, but is not limited thereto.

### Negative Electrode

The negative electrode includes a negative electrode current collector and a negative electrode active material layer including the negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery. Examples of the carbon material may include crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, SiOₓ (0 < x < 2), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and the like. At least one of them may be mixed with SiO₂.

The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a specific embodiment, the anode active material may be a Si-C composite including a Si-based active material and a carbon-based active material.

An average particle diameter of the Si-based active material in the Si-C composite may be about 50 nm to about 200 nm. When the average particle diameter of the Si-based active material is within the above range, volume expansion occurring during charging and discharging may be suppressed, and a disconnection of a conductive path due to particle crushing during charging and discharging may be prevented. The Si-based active material may be included in an amount of about 1 wt% to about 60 wt%, for example, about 3 wt% to about 60 wt%, based on a total weight of the Si-C composite.

In another specific embodiment, the negative electrode active material may further include crystalline carbon together with the aforementioned Si-C composite.

When the negative electrode active material includes a Si-C composite and crystalline carbon together, the Si-C composite and crystalline carbon may be included in the form of a mixture, and in this case, the Si-C composite and crystalline carbon may be included in a weight ratio of about 1:99 to about 50:50. More specifically, the Si-C composite and crystalline carbon may be included in a weight ratio of about 5:95 to about 20:80.

The crystalline carbon may include, for example, graphite, and more specifically, may include natural graphite, artificial graphite, or a mixture thereof. The crystalline carbon may have an average particle diameter of about 5 µm to about 30 µm.

Herein, the average particle diameter may be a particle size (D50) at a volume ratio of 50% in a cumulative size-distribution curve.

The Si-C composite may further include a shell surrounding the surface of the Si-C composite, and the shell may include amorphous carbon. The amorphous carbon may include soft carbon, hard carbon, a mesophase pitch carbonization product, calcined coke, or a mixture thereof.

The amorphous carbon may be included in an amount of about 1 to about 50 parts by weight, for example, about 5 to about 50 parts by weight, or about 10 to about 50 parts by weight, based on 100 parts by weight of the carbon-based active material.

In the negative electrode active material layer, the negative electrode active material may be included in an amount of about 95 wt% to about 99 wt% based on the total weight of the negative electrode active material layer.

In an embodiment, the negative electrode active material layer may include a binder, and optionally a conductive material. In the negative electrode active material layer, the amount of the binder may be about 1 wt% to about 5 wt% based on a total weight of the negative electrode active material layer. When it further includes the conductive material, it may include about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrilebutadiene rubber, an acrylic rubber, a butyl rubber, a fluorine rubber, and a combination thereof. The polymer resin binder may be selected from polytetrafluoroethylene, an ethylenepropylene copolymer, polyethyleneoxide, polyvinylpyrrolidone, polyepichlorohydrin, polyphosphazene, polyacrylonitrile, polystyrene, ethylenepropylenediene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as the negative electrode binder, a cellulose-based compound may be further used to provide viscosity as a thickener. The cellulose-based compound includes one or more of carboxylmethyl cellulose, hydroxypropylmethyl cellulose, methyl cellulose, or an alkali metal salt thereof. The alkali metal may be Na, K, or Li. Such a thickener may be included in an amount of about 0.1 to about 3 parts by weight based on 100 parts by weight of the negative electrode active material.

The conductive material is used to impart conductivity to the electrode, and in the configured battery, any material that does not cause chemical change and is electronically conductive may be used. For example, the conductive material may be a carbon-based material such as natural graphite, artificial graphite, carbon black, acetylene black, ketjen black, a carbon fiber, a carbon nanofiber, or a carbon nanotube; a metal-based material such as a metal powder or a metal fiber including copper, nickel, aluminium, and silver; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

### Separator

The separator 113 separates the positive electrode 114 and the negative electrode 112 and provides a passage for lithium ions to move, and may be any one commonly used in a lithium ion battery. The separator may have low resistance to ion movement of the electrolyte and excellent ability to absorb the electrolyte. For example, the separator may include a glass fiber, polyester, polyethylene, polypropylene, polytetrafluoroethylene, or a combination thereof, and may be in the form of a non-woven fabric or a woven fabric. For example, in lithium ion batteries, polyolefin-based polymer separators such as polyethylene and polypropylene are mainly used, and coated separators containing ceramic components or polymer materials may be used to secure heat resistance or mechanical strength can be used.

The separator may be, for example, polyethylene, polypropylene, polyvinylidene fluoride, or a multilayer film of two or more layers thereof, and may be a mixed multilayer film such as a polyethylene/polypropylene two-layer separator, a polyethylene/polypropylene/polyethylene three-layer separator, a polypropylene/polyethylene/polypropylene three-layer separator, or the like.

The separator may include a functional layer on a porous substrate. The functional layer may be, for example, at least one of a heat resistant layer and an adhesive layer from the viewpoint of enabling additional functions. For example, the heat resistant layer may include a heat resistant resin and optionally a filler. In addition, the adhesive layer may include an adhesive resin and optionally a filler. The filler may be an organic filler or an inorganic filler.

Hereinafter, the present disclosure is illustrated in more detail with reference to examples. However, the present disclosure is not limited to these examples.

### Preparation of Electrolyte

### Comparative Preparation Example 1

Ethylene carbonate (EC), propylene carbonate (PC), and propyl propionate (PP) were mixed in a volume ratio of 10:15:75, and LiPF₆ was added thereto to prepare a 1.3 M mixed solution. Subsequently, 7 parts by weight of FEC, 1 part by weight of VEC, and 0.2 parts by weight of LiBF₄ based on 100 parts by weight of the mixed solution were added thereto, preparing an electrolyte.

### Comparative Preparation Example 2

An electrolyte was prepared in the same manner as in Comparative Preparation Example 1 except that 1 part by weight of the compound represented by Chemical Formula 1-2 as fluorinated ketone based on 100 parts by weight of the mixed solution was added.

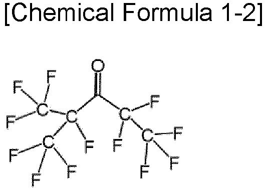

### Comparative Preparation Example 3

An electrolyte was prepared in the same manner as in Comparative Preparation Example 1 except that 0.5 parts by weight of silver nitrate based on 100 parts by weight of the mixed solution was added.

### Comparative Preparation Example 4

An electrolyte was prepared in the same manner as in Comparative Preparation Example 1 except that 0.5 parts by weight of the compound represented by Chemical Formula 2-1 based on 100 parts by weight of the mixed solution was added.

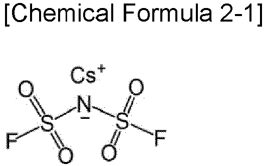

### Preparation Example 1

An electrolyte was prepared in the same manner as in Comparative Preparation Example 1 except that 1 part by weight of the compound represented by Chemical Formula 1-2 as fluorinated ketone and 0.5 parts by weight of silver nitrate based on 100 parts by weight of the mixed solution were added.

### Preparation Example 2

An electrolyte was prepared in the same manner as in Preparation Example 1 except that 0.5 parts by weight of the compound represented by Chemical Formula 2-1 based on 100 parts by weight of the mixed solution was added.

### Manufacture of Rechargeable Lithium Battery Cells

### Example 1

### (Manufacture of Negative Electrode)

98 wt% of artificial graphite (BSG-L, Tianjin BTR New Energy Technology Co., Ltd.), 1.0 wt% of a styrene-butadiene rubber (SBR) binder (ZEON Chemicals L.P.), and 1.0 wt% of carboxylmethyl cellulose (CMC, NIPPON A&L) were mixed and then, added to distilled water and then, stirred for 60 minutes with a mechanical stirrer, preparing negative electrode active material slurry. The slurry was coated to be about 60 µm thick on a 10 µm-thick copper current collector with a doctor blade, dried at 100 °C with a hot air for 0.5 hours, dried again under vacuum at 120 °C for 4 hours, and roll-pressed, manufacturing a negative electrode plate. Herein, the negative electrode had density of 1.6 g/cc.

### (Manufacture of Positive Electrode)

96 wt% of LiCoO₂, 2 wt% of carbon black (Ketjenblack, ECP) as a conductive material, and 2 wt% of polyvinylidene fluoride (PVdF, S6020, Solvay) as a binder were mixed in an N-methyl-2-pyrrolidone solvent and stirred for 30 minutes with a mechanical stirrer, preparing positive electrode active material slurry. The slurry was coated to be about 60 µm thick on a 20 µm-thick aluminium current collector with a doctor blade, dried at 100 °C with a hot air drier for 0.5 hours, dried again under vacuum at 120 °C for 4 hours, and roll-pressed, manufacturing a positive electrode plate.

### (Manufacture of Battery Cells)

The manufactured positive and negative electrodes and a 25 µm-thick polyethylene separator were assembled to manufacture an electrode assembly, and the electrolyte of Preparation Example 1 was injected thereinto, manufacturing a rechargeable lithium battery cell. The rechargeable lithium battery cell was operated at a voltage of 4.5 V and charged at 3.0 C.

### Example 2

A rechargeable lithium battery cell was manufactured in the same manner in Example 1 except that the electrolyte of Preparation Example 2 was used.

### Comparative Example 1

A rechargeable lithium battery cell was manufactured in the same manner in Example 1 except that the electrolyte of Comparative Preparation Example 1 was used, a negative electrode with density of 1.5 g/cc was used, and the cell was charged at 1.3 C.

### Comparative Example 2

A rechargeable lithium battery cell was manufactured in the same manner in Example 1 except that the electrolyte of Comparative Preparation Example 1 was used, and the cell was charged at 1.3 C.

### Comparative Example 3

A rechargeable lithium battery cell was manufactured in the same manner in Example 1 except that the electrolyte of Comparative Preparation Example 1 was used.

### Comparative Example 4

A rechargeable lithium battery cell was manufactured in the same manner in Example 1 except that the electrolyte of Comparative Preparation Example 2 was used.

### Comparative Example 5

A rechargeable lithium battery cell was manufactured in the same manner in Example 1 except that the electrolyte of Comparative Preparation Example 3 was used.

### Comparative Example 6

A rechargeable lithium battery cell was manufactured in the same manner in Example 1 except that the electrolyte of Comparative Preparation Example 4 was used.

Each additive composition of the rechargeable lithium battery cells according to Examples 1 to 2, and Comparative Examples 1 to 6 was shown in Table 1.

**[Table 1]**

| | Negative electrode density (g/cc) | Charging rate | Compositions of Electrolyte | | |
|---|---|---|---|---|---|
| | | | PMP (parts by weight) | AgNO₃ (parts by weight) | CsFSI (parts by weight) |
| Comp. Ex.1 | 1.5 | 1.3 C | - | - | - |
| Comp. Ex.2 | 1.6 | 1.3 C | - | - | - |
| Comp. Ex.3 | | 3.0 C | - | - | - |
| Comp. Ex.4 | | | 1 | - | - |
| Comp. Ex.5 | | | - | 0.5 | - |
| Comp. Ex.6 | | | - | - | 0.5 |
| Ex. 1 | | | 1 | 0.5 | - |
| Ex. 2 | | | 1 | 0.5 | 0.5 |

In Table 1, the "PMP" is a compound represented by the Chemical Formula 1-2, and the "CsFSI" is a compound represented by the Chemical Formula 2-1.

### Evaluation 1: Evaluation of Dendrite Generation

A LiCoO₂ positive electrode, a graphite negative electrode, and a separator were used to manufacture a 2032 coin cell, and the cell was charged at 4.6 V (CC/CV 0.2 C 4.6 V, 0.05 C cutoff) and disassembled to take the negative electrode, which was examined with respect to whether or not lithium dendrite was generated.

The results are shown in Table 2.

**[Table 2]**

| | Whether lithium dendrite is generated or not |
|---|---|
| Comp. Ex.1 | X |
| Comp. Ex.2 | X |
| Comp. Ex.3 | O |
| Comp. Ex.4 | O |
| Comp. Ex.5 | O |
| Comp. Ex.6 | O |
| Ex. 1 | X |
| Ex. 2 | X |

Referring to Table 2, in the rechargeable lithium battery cells of Examples 1 and 2 were suppressed from generation of lithium dendrite, but the cells of Comparative Examples 3 to 6 having the same negative electrode density and charging speed as the examples, lithium dendrite was generated. Accordingly, the rechargeable lithium battery cells according to the examples used the electrolyte according to an embodiment and thus were suppressed from generation of lithium dendrite and increased safety of the cells.

### Evaluation 2: Evaluation of High-temperature Cycle-life Characteristics

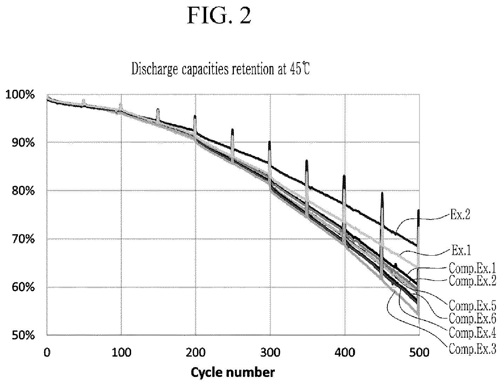

The rechargeable lithium battery cells according to Examples 1 to 2 and Comparative Examples 3 to 6 were constant current charged to 4.5 V at a charge rate of 3.0 C and subsequently, constant current discharged to a voltage of 3.0 V at a high temperature of 45 °C, wherein the charge and discharge were 500 cycles repeated to measure discharge capacity, which was used to calculate discharge capacity retention and thus evaluate high-temperature cycle-life characteristics of the cells. The measured discharge capacities are shown in Table 3, and discharge capacity retention changes according to charge and discharge cycles are shown in FIG. 2.

**[Table 3]**

| | 4.5V high temperature cycle-life @ 500 cycles (%) |
|---|---|
| Comp. Ex.3 | 55 |
| Comp. Ex.4 | 57 |
| Comp. Ex.5 | 59 |
| Comp. Ex.6 | 57 |
| Example 1 | 64 |
| Example 2 | 69 |

Referring to Table 3 and FIG. 2, the rechargeable lithium battery cells of Examples 1 and 2 exhibited excellent discharge capacity retention, compared with the rechargeable lithium battery cells of Comparative Examples 3 to 6. Since fluorinated ketone and Ag salt were simultaneously used as an electrolyte additive according to an embodiment, high-rate charging performance under high density and high voltage conditions turned out to be improved.

While this invention has been described in connection with what is presently considered to be practical example embodiments, it is to be understood that the invention is not limited to the disclosed embodiments.

### <Description of Symbols>

100: rechargeable lithium battery
112: negative electrode
113: separator
114: positive electrode
120: battery case
140: sealing member

## Claims

1. An electrolyte for a rechargeable lithium battery, comprising
a non-aqueous organic solvent, a lithium salt, and an additive,
wherein the additive includes a fluorinated ketone and an Ag salt.

2. The electrolyte of claim 1, wherein the fluorinated ketone is represented by Chemical Formula 1: 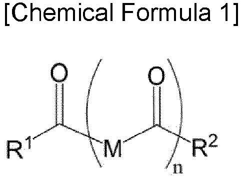 wherein, in Chemical Formula 1,
M is a substituted or unsubstituted C1 to C30 alkylene group, a substituted or unsubstituted C2 to C30 alkenylene group, or a substituted or unsubstituted C2 to C30 alkynylene group,
n is an integer of 0 to 5, and R¹ and R² are each independently a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C20 cycloalkyl group, or a substituted or unsubstituted C6 to C20 aryl group, provided that at least one of R¹ and R² includes at least one fluorine.

3. The electrolyte of claim 2, wherein, in Chemical Formula 1, M is a substituted or unsubstituted C1 to C10 alkylene group, R¹ and R² are each independently a substituted or unsubstituted C1 to C10 alkyl group, a substituted or unsubstituted C2 to C10 alkenyl group, or a substituted or unsubstituted C2 to C10 alkynyl group, provided that at least one of R¹ and R² includes at least one fluorine, and n is 0 or 1.

4. The electrolyte of claim 2, wherein at least one of R¹ and R² in Chemical Formula 1 is a C1 to C10 fluoroalkylene group in which at least one hydrogen is substituted with fluorine.

5. The electrolyte of claim 2, wherein at least one of R¹ and R² in Chemical Formula 1 is a C1 to C10 fluoroalkylene group substituted with 3 to 21 fluorines.

6. The electrolyte of claim 2, wherein at least one of R¹ and R² in Chemical Formula 1 is a C1 to C10 perfluoroalkylene group in which all hydrogens are substituted with fluorine.

7. The electrolyte of claim 1, wherein the fluorinated ketone is represented by Chemical Formula 1-1: 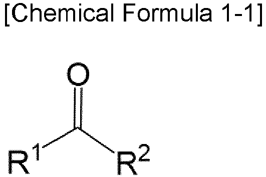 wherein, in Chemical Formula 1-1,
R¹ and R² are each independently a substituted or unsubstituted C1 to C30 alkyl group, provided that at least one of R¹ and R² includes at least one fluorine.

8. The electrolyte of claim 7, wherein:
(i) at least one of R¹ and R² in Chemical Formula 1-1 is a C1 to C10 perfluoroalkyl group in which all hydrogens are substituted with fluorine; and/or
(ii) R¹ and R² in Chemical Formula 1-1 are functional groups different from each other and Chemical Formula 1-1 has an asymmetric structure.

9. The electrolyte of claim 1, wherein the fluorinated ketone is represented by any one of Chemical Formula 1-2 and Chemical Formula 1-3:

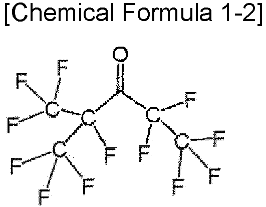

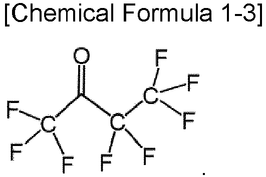

10. The electrolyte of any one of claims 1 to 9, wherein:
(i) the fluorinated ketone is included in an amount of 1.0 wt% to 10.0 wt% based on the total weight of the electrolyte for a rechargeable lithium battery; and/or
(ii) the Ag salt includes one or more selected from AgNO₃, AgPF₆, AgFSI, AgTFSI, AgF, AgSO₃CF₃, AgBF₄, AgNO₂, AgN₃, and AgCN; and/or
(iii) the Ag salt is included in an amount of 0.1 wt% to 10.0 wt% based on the total weight of the electrolyte for a rechargeable lithium battery; and/or
(iv) the fluorinated ketone and the Ag salt are included in a weight ratio of 4:6 to 9:1.

11. The electrolyte of any one of claims 1 to 10, wherein the additive further includes a compound represented by Chemical Formula 2: 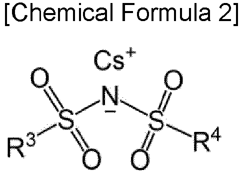 wherein, in Chemical Formula 2,
R³ and R⁴ are each independently a fluoro group or a substituted C1 to C10 fluoroalkyl group including at least one fluorine.

12. The electrolyte of claim 11, wherein:
(i) Chemical Formula 2 is represented by Chemical Formula 2-1 or Chemical Formula 2-2. 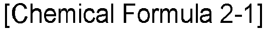 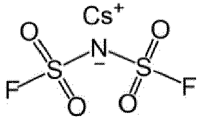 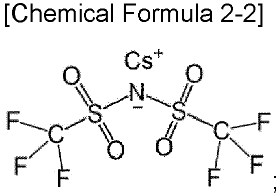 and/or
(ii) the compound represented by Chemical Formula 2 is included in an amount of 0.1 wt% to 5.0 wt% based on the total weight of the electrolyte for a rechargeable lithium battery; and/or
(iii) a weight ratio of the fluorinated ketone and the compound represented by Chemical Formula 2 is 4:6 to 9:1.

13. The electrolyte of any one of claims 1 to 12, wherein:
(i) the additive is included in an amount of 1.0 wt% to 30.0 wt% based on the total weight of the electrolyte for a rechargeable lithium battery; and/or
(ii) the electrolyte for a rechargeable lithium battery further includes other additives, and
the other additives include at least one selected from vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluorobiphenyl (2-FBP), lithium difluorooxalate borate (LiDFOB), and lithium bisoxalate borate (LiBOB).

14. A rechargeable lithium battery,
a positive electrode including a positive electrode active material;
a negative electrode including a negative electrode active material;
a separator between the positive electrode and the negative electrode; and
the electrolyte for a rechargeable lithium battery of any one of claims 1 to 13.

15. The rechargeable lithium battery of claim 14, wherein the negative electrode has a density of greater than or equal to 1.6 g/cm³.

## Patentansprüche

1. Elektrolyt für eine wiederaufladbare Lithiumbatterie, umfassend
ein nicht-wässriges organisches Lösungsmittel, ein Lithiumsalz und einen Zusatzstoff,
wobei der Zusatzstoff ein fluoriertes Keton und ein Ag-Salz beinhaltet.

2. Elektrolyt nach Anspruch 1, wobei das fluorierte Keton durch chemische Formel 1 dargestellt wird: 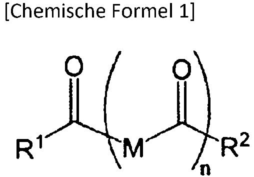 wobei in chemischer Formel 1
M eine substituierte oder unsubstituierte C1 bis C30 Alkylengruppe, eine substituierte oder unsubstituierte C2 bis C30 Alkenylengruppe oder eine substituierte oder unsubstituierte C2 bis C30 Alkinylengruppe ist,
n eine ganze Zahl von 0 bis 5 ist, und R¹ und R² jeweils unabhängig voneinander eine substituierte oder unsubstituierte C1 bis C30 Alkylgruppe, eine substituierte oder unsubstituierte C2 bis C30 Alkenylgruppe, eine substituierte oder unsubstituierte C2 bis C30 Alkinylgruppe, eine substituierte oder unsubstituierte C3 bis C20 Cycloalkylgruppe oder eine substituierte oder unsubstituierte C6 bis C20 Arylgruppe sind, vorausgesetzt, dass mindestens eine der Gruppen R¹ und R² mindestens ein Fluoratom beinhaltet.

3. Elektrolyt nach Anspruch 2, wobei in chemischer Formel 1 M eine substituierte oder unsubstituierte C1 bis C10 Alkylengruppe ist, R¹ und R² jeweils unabhängig voneinander eine substituierte oder unsubstituierte C1 bis C10 Alkylgruppe, eine substituierte oder unsubstituierte C2 bis C10 Alkenylgruppe oder eine substituierte oder unsubstituierte C2 bis C10 Alkinylgruppe sind, vorausgesetzt, dass mindestens eines von R¹ und R² mindestens ein Fluoratom beinhaltet und n gleich 0 oder 1 ist.

4. Elektrolyt nach Anspruch 2, wobei mindestens eines von R¹ und R² in chemischer Formel 1 eine C1 bis C10 Fluoralkylengruppe ist, in der mindestens ein Wasserstoffatom durch Fluor substituiert ist.

5. Elektrolyt nach Anspruch 2, wobei mindestens eines von R¹ und R² in chemischer Formel 1 eine mit 3 bis 21 Fluoratomen substituierte C1 bis C10 Fluoralkylengruppe ist.

6. Elektrolyt nach Anspruch 2, wobei mindestens eines von R¹ und R² in chemischer Formel 1 eine C1 bis C10 Perfluoralkylengruppe ist, in der alle Wasserstoffatome durch Fluor substituiert sind.

7. Elektrolyt nach Anspruch 1, wobei das fluorierte Keton durch chemische Formel 1-1 dargestellt wird: 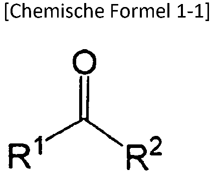 wobei in chemischer Formel 1-1
R¹ und R² jeweils unabhängig voneinander eine substituierte oder unsubstituierte C1 bis C30 Alkylgruppe sind, vorausgesetzt, dass mindestens eines von R¹ und R² mindestens ein Fluoratom beinhaltet.

8. Elektrolyt nach Anspruch 7, wobei:
(i) mindestens eines von R¹ und R² in chemischer Formel 1-1 eine C1- bis C10-Perfluoralkylgruppe ist, in der alle Wasserstoffatome durch Fluor substituiert sind; und/oder
(ii) R¹ und R² in chemischer Formel 1-1 funktionelle Gruppen sind, die sich voneinander unterscheiden, und chemische Formel 1-1 eine asymmetrische Struktur hat.

9. Elektrolyt nach Anspruch 1, wobei das fluorierte Keton durch eine von chemischen Formeln 1-2 und 1-3 dargestellt ist:

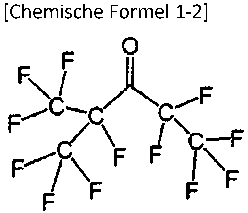

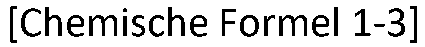

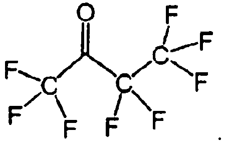

10. Elektrolyt nach einem der Ansprüche 1 bis 9, wobei:
(i) das fluorierte Keton in einer Menge von 1,0 Gew.-% bis 10,0 Gew.-%, bezogen auf das Gesamtgewicht des Elektrolyten für eine wiederaufladbare Lithiumbatterie, beinhaltet ist; und/oder
(ii) das Ag-Salz eines oder mehrere ausgewählt aus AgNO₃, AgPF₆, AgFSI, AgTFSI, AgF, AgSO₃CF₃, AgBF₄, AgNO,, AgN₃ und AgCN beinhaltet; und/oder
(iii) das Ag-Salz in einer Menge von 0,1 Gew.-% bis 10,0 Gew.-%, bezogen auf das Gesamtgewicht des Elektrolyten für eine wiederaufladbare Lithiumbatterie, beinhaltet ist; und/oder
(iv) das fluorierte Keton und das Ag-Salz in einem Gewichtsverhältnis von 4:6 bis 9:1 beinhaltet sind.

11. Elektrolyt nach einem der Ansprüche 1 bis 10, wobei der Zusatzstoff ferner eine Verbindung mit der folgenden chemischen Formel 2 beinhaltet: 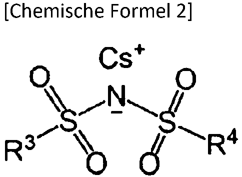 wobei in chemischer Formel 2
R³ und R⁴ jeweils unabhängig voneinander eine Fluorgruppe oder eine substituierte C1 bis C10 Fluoralkylgruppe sind, die mindestens ein Fluoratom beinhaltet.

12. Elektrolyt nach Anspruch 11, wobei:
(i) chemische Formel 2 durch chemische Formel 2-1 oder chemische Formel 2-2 dargestellt ist. 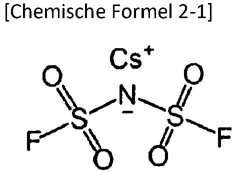 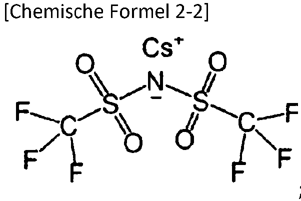 und/oder
(ii) die durch chemische Formel 2 dargestellte Verbindung in einer Menge von 0,1 Gew.-% bis 5,0 Gew.-%, bezogen auf das Gesamtgewicht des Elektrolyten für eine wiederaufladbare Lithiumbatterie, beinhaltet ist; und/oder
(iii) ein Gewichtsverhältnis des fluorierten Ketons und der durch chemische Formel 2 dargestellten Verbindung 4:6 bis 9:1 beträgt.

13. Elektrolyt nach einem der Ansprüche 1 bis 12, wobei:
(i) der Zusatzstoff in einer Menge von 1,0 Gew.-% bis 30,0 Gew.-%, bezogen auf das Gesamtgewicht des Elektrolyten für eine wiederaufladbare Lithiumbatterie, beinhaltet ist; und/oder
(ii) der Elektrolyt für eine wiederaufladbare Lithiumbatterie ferner weitere Zusatzstoffe beinhaltet und
die weiteren Zusatzstoffe mindestens eines, ausgewählt aus Vinylencarbonat (VC), Fluorethylencarbonat (FEC), Difluorethylencarbonat (DFEC), Chlorethylencarbonat (CEC), Dichlorethylencarbonat (DCEC), Bromethylencarbonat (BEC), Dibromethylencarbonat (DBEC), Nitroethylencarbonat, Cyanethylencarbonat, Vinylethylencarbonat (VEC), Succinonitril (SN), Adiponitril (AN), 1,3,6-Hexantricyanid (HTCN), Propensulton (PST), Propansulton (PS), Lithiumtetrafluoroborat (LiBF₄), Lithiumdifluorophosphat (LiPO₂F₂), 2-Fluorbiphenyl (2-FBP), Lithiumdifluoroxalatborat (LiDFOB) und Lithiumbisoxalatborat (LiBOB) beinhalten.

14. Wiederaufladbare Lithiumbatterie,
eine positive Elektrode beinhaltend ein positives Elektrodenaktivmaterial;
eine negative Elektrode beinhaltend ein negatives Elektrodenaktivmaterial;
ein Trennelement zwischen der positiven und der negativen Elektrode; und
der Elektrolyt für eine wiederaufladbare Lithiumbatterie nach einem der Ansprüche 1 bis 13.

15. Wiederaufladbare Lithiumbatterie nach Anspruch 14, wobei die negative Elektrode eine Dichte von größer oder gleich 1,6 g/cm³ aufweist.

## Revendications

1. Électrolyte pour une batterie au lithium rechargeable, comprenant
un solvant organique non aqueux, un sel de lithium et un additif,
dans lequel l'additif inclut une cétone fluorée et un sel d'argent.

2. Électrolyte selon la revendication 1, dans lequel la cétone fluorée est représentée par la Formule chimique 1 : 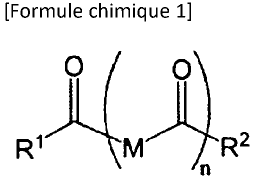 dans lequel, dans la Formule chimique 1,
M est un groupe alkylène en C1 à C30 substitué ou non substitué, un groupe alcénylène en C2 à C30 substitué ou non substitué, ou un groupe alcynylène en C2 à C30 substitué ou non substitué,
n est un entier de 0 à 5, et R¹ et R² sont chacun indépendamment un groupe alkyle en C1 à C30 substitué ou non substitué, un groupe alcényle en C2 à C30 substitué ou non substitué, un groupe alcynyle en C2 à C30 substitué ou non substitué, un groupe cycloalkyle en C3 à C20 substitué ou non substitué, ou un groupe aryle en C6 à C20 substitué ou non substitué, à condition qu'au moins un de R¹ et R² inclut au moins un atome de fluor.

3. Électrolyte selon la revendication 2, dans lequel, dans la Formule chimique 1, M est un groupe alkylène en C1 à C10 substitué ou non substitué, R¹ et R² sont chacun indépendamment un groupe alkyle en C1 à C10 substitué ou non substitué, un groupe alcényle en C2 à C10 substitué ou non substitué, ou un groupe alcynyle en C2 à C10 substitué ou non substitué, à condition qu'au moins un de R¹ et R² inclut au moins un atome de fluor, et n est 0 ou 1.

4. Électrolyte selon la revendication 2, dans lequel au moins un de R¹ et R² de la Formule chimique 1 est un groupe fluoroalkylène en C1 à C10 dans lequel au moins un atome d'hydrogène est substitué par un atome de fluor.

5. Électrolyte selon la revendication 2, dans lequel au moins un de R¹ et R² de la Formule chimique 1 est un groupe fluoroalkylène en C1 à C10 substitué par 3 à 21 atomes de fluore.

6. Électrolyte selon la revendication 2, dans lequel au moins un de R¹ et R² de la Formule chimique 1 est un groupe perfluoroalkylène en C1 à C10 dans lequel tous les atomes d'hydrogène sont substitués par des atomes de fluor.

7. Électrolyte selon la revendication 1, dans lequel la cétone fluorée est représentée par la Formule chimique 1-1 : 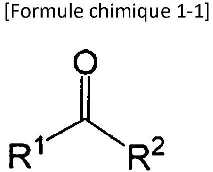 dans lequel, dans la Formule chimique 1-1,
R¹ et R² sont chacun indépendamment un groupe alkyle en C1 à C30 substitué ou non substitué, à condition qu'au moins un de R¹ et R² inclut au moins un atome de fluor.

8. Électrolyte selon la revendication 7, dans lequel :
(i) au moins un de R¹ et R² de la Formule chimique 1-1 est un groupe perfluoroalkyle en C1 à C10 dans lequel tous les hydrogènes sont substitués par des atomes de fluor ; et/ou
(ii) R¹ et R² dans la Formule chimique 1-1 sont des groupes fonctionnels différents l'un de l'autre et la Formule chimique 1-1 présente une structure asymétrique.

9. Électrolyte selon la revendication 1, dans lequel la cétone fluorée est représentée par l'une quelconque des formules chimiques 1-2 et 1-3 :

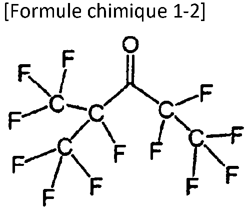

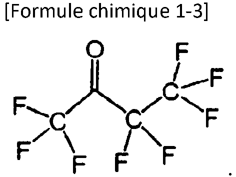

10. Électrolyte selon l'une quelconque des revendications 1 à 9, dans lequel :
(i) la cétone fluorée est incluse en une quantité de 1,0 % en poids à 10,0 % en poids par rapport au poids total de l'électrolyte pour une batterie au lithium rechargeable ; et/ou
(ii) le sel d'argent inclut un ou plusieurs choisis parmi AgNO₃, AgPF₆, AgFSI, AgTFSI, AgF, AgSO₃CF₃, AgBF₄, AgNO₂, AgN₃, et AgCN ; et/ou
(iii) le sel d'argent est inclus en une quantité de 0,1 % en poids à 10,0 % en poids par rapport au poids total de l'électrolyte pour une batterie au lithium rechargeable ; et/ou
(iv) la cétone fluorée et le sel d'argent sont inclus dans un rapport pondéral de 4:6 à 9:1.

11. Électrolyte selon l'une quelconque des revendications 1 à 10, dans lequel l'additif inclut en outre un composé représenté par la Formule chimique 2 : 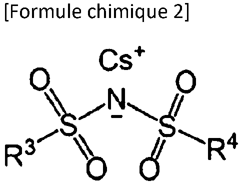 dans lequel, dans la Formule chimique 2,
R³ et R⁴ sont chacun indépendamment un groupe fluoro ou un groupe fluoroalkyle substitué en C1 à C10 incluant au moins un atome de fluor.

12. Électrolyte selon la revendication 11, dans lequel :
(i) la Formule chimique 2 est représentée par la Formule chimique 2-1 ou la Formule chimique 2-2. 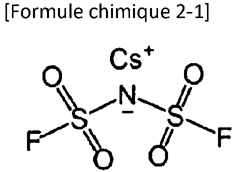 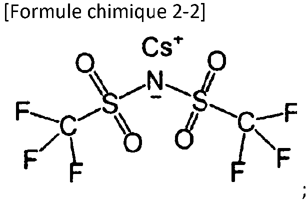 et/ou
(ii) le composé représenté par la Formule chimique 2 est inclus en une quantité de 0,1 % en poids à 5,0 % en poids par rapport au poids total de l'électrolyte pour une batterie au lithium rechargeable ; et/ou
(iii) un rapport pondéral de la cétone fluorée et du composé représenté par la Formule chimique 2 est 4:6 à 9:1.

13. Électrolyte selon l'une quelconque des revendications 1 à 12, dans lequel :
(i) l'additif est inclus en une quantité de 1,0 % en poids à 30,0 % en poids par rapport au poids total de l'électrolyte pour une batterie au lithium rechargeable ; et/ou
(ii) l'électrolyte d'une batterie au lithium rechargeable inclut en outre d'autres additifs, et
les autres additifs incluent au moins un choisi parmi le carbonate de vinylène (VC), le carbonate de fluoroéthylène (FEC), le carbonate de difluoroéthylène (DFEC), le carbonate de chloroéthylène (CEC), le carbonate de dichloroéthylène (DCEC), le carbonate de bromoéthylène (BEC), le carbonate de dibromoéthylène (DBEC), le carbonate de nitroéthylène, le carbonate de cyanoéthylène, le carbonate de vinyléthylène (VEC), le succinonitrile (SN), l'adiponitrile (AN), le tricyanure de 1,3,6-hexane (HTCN), la propène sultone (PST), la propane sultone (PS), le tétrafluoroborate de lithium (LiBF₄), le difluorophosphate de lithium (LiPO₂F₂), le 2-fluorobiphényle (2-FBP), le difluorooxalate borate de lithium (LiDFOB) et le bisoxalate borate de lithium (LiBOB).

14. Batterie au lithium rechargeable,
une électrode positive incluant un matériau actif d'électrode positive ;
une électrode négative incluant un matériau actif d'électrode négative ;
un séparateur entre l'électrode positive et l'électrode négative ; et
l'électrolyte d'une batterie au lithium rechargeable selon l'une quelconque des revendications 1 à 13.

15. Batterie au lithium rechargeable selon la revendication 14, dans laquelle l'électrode négative présente une densité supérieure ou égale à 1,6 g/cm³.
